# EUROPEAN PATENT APPLICATION

(11) **EP 3 901 585 A1**
(43) Date of publication of application: **27.10.2021**
(21) Application number: 18943524.1
(22) Date of filing: 20.12.2018
(51) Int. Cl.: G01D 18/00, G01K 7/00, F03D 7/00, F03D 80/60

(54) **DETECTION SYSTEM AND WIND DRIVEN GENERATOR**

(71) Applicant: Schaeffler Technologies AG & Co. KG, 91074 Herzogenaurach (DE)
(72) Inventor: WANG, Aiping, Suzhou, Jiangsu 215028 (CN); GUAN, Ran, Shanghai 201104 (CN)
(86) International application number: PCT/CN2018/122426
(87) International publication number: WO 2020/124503

(57) **Abstract**

Die vorliegende Erfindung betrifft ein Erfassungssystem und einen windgetriebenen Generator. Das Erfassungssystem umfasst: eine Vielzahl von passiven drahtlosen Sensoren, die jeweils an den entsprechenden zu erfassenden Positionen bereitgestellt sind und zum Beziehen von Erfassungssignalen der zu erfassenden Positionen verwendet werden; und ein koaxiales Leckkabel, das entlang der zu erfassenden Position bereitgestellt ist, wobei das koaxiale Leckkabel elektromagnetische Wellen emittieren kann, um die Vielzahl von passiven drahtlosen Sensoren anzusteuern, und das von den passiven drahtlosen Sensoren gesendete Erfassungssignal empfangen kann. Das Erfassungssystem gemäß Ausführungsformen der vorliegenden Erfindung kann Installationsraum sparen und Wartungskosten reduzieren, da es nicht erforderlich ist, eine Batterie regelmäßig auszutauschen, und bei der Durchführung von Mehrpunktmessungen sind die Kosten reduziert und die Anzahl der passiven drahtlosen Sensoren, die das System konfigurieren kann, ist erhöht.

## Description

### Technisches Gebiet

Die vorliegende Erfindung bezieht sich auf das Gebiet der Messtechniken und insbesondere auf ein Erfassungssystem und einen windgetriebenen Generator.

### Hintergrund

Ein windgetriebener Generator ist ein Kraftwerk, das Windenergie in mechanische Energie umwandelt, sodass die mechanische Energie einen Rotor drehend antreibt, um schließlich einen Wechselstrom auszugeben. Der windgetriebene Generator kann aus statischen Komponenten und dynamischen Komponenten gebildet sein. Die statischen Komponenten können eine Steuerung, einen Maschinenraum usw. umfassen, und die dynamischen Komponenten können rotierende Vorrichtungen wie ein Lager, ein Getriebe, einen Generator und einen Motor und dergleichen umfassen.

Während des Betriebs des windgetriebenen Generators ändert sich die Temperatur der einzelnen Komponenten. Wenn die Temperatur des Getriebes, des Generators, eines Öl-Wasser-Kühlers, einer Spindel oder anderer Komponenten einen bestimmten Wertebereich überschreitet, kann der Wirkungsgrad der Stromerzeugung beeinträchtigt werden. Daher ist es sehr wichtig, die Temperatur des windgetriebenen Generators zu überwachen und zu steuern.

Derzeit ist es in einigen Szenarien erforderlich, die Temperaturinformationen aller Komponenten des windgetriebenen Generators über ein separates System zu überwachen. Es ist jedoch schwierig, die Temperaturinformationen dynamischer Komponenten zu überwachen, wohingegen es relativ einfach ist, die Temperaturinformationen statischer Komponenten zu überwachen, und die Temperatur wird normalerweise unter Verwendung von drahtlosen Temperaturmessverfahren erfasst.

Verwandte drahtlose Temperaturmessverfahren umfassen hauptsächlich Folgendes:
1) Verwenden einer drahtlosen Temperaturmesseinheit mit einer Batterie, um drahtlos Temperatursignale zu überwachen und auszugeben, wobei die drahtlose Temperaturmesseinheit eine eigene Batterie zur Stromversorgung verwendet;
2) Verwenden einer drahtlos ladenden Temperaturmesseinheit, um drahtlos Temperatursignale zu überwachen und auszugeben und elektrische Leistung von einer Einheit zum drahtlosen Laden zu beziehen;
3) Verwenden eines Akustische-Oberflächenwellen- (Surface Acoustic Wave- bzw. SAW-) -Temperatursensors oder -Tags (Etiketten) zur Überwachung. Der SAW-Temperatursensor bzw. das SAW-Tag wird über elektromagnetische Wellen aufgeladen, und der SAW-Temperatursensor bzw. das SAW-Tag gibt über die elektromagnetischen Wellen drahtlose Temperatursignale aus.

Die oben genannten bekannten Verfahren weisen folgende Probleme auf:
1) Die drahtlose Temperaturmesseinheit mit Batterie benötigt einen großen Installationsraum und die Batterie muss regelmäßig ausgetauscht werden.
2) Die drahtlos ladende Temperaturmesseinheit benötigt auch einen großen Installationsraum, und jede Temperaturmesseinheit benötigt eine Einheit zum drahtlosen Laden und eine Signalverarbeitungseinheit. Daher ist das System für Mehrpunktmessungen sehr groß und die Kosten sind hoch.
3) Ein Sensorchip des SAW-Temperatursensors ist sehr klein und kann elektrische Leistung aus elektromagnetischen Wellen beziehen, was für die Messung einer Lagertemperatur sehr gut geeignet ist. Der Abstand zwischen dem SAW-Temperatursensor und einer Antenne unterliegt jedoch relativ strengen Vorgaben (innerhalb von 2 Metern), und das Signal ist empfindlich gegenüber der Umgebungsanordnung. Außerdem werden die Ansteuerung und das Signallesen des SAW-Temperatursensors nacheinander mittels serieller Kommunikation über die Antenne durchgeführt. Dies bedeutet, dass bei einer Vielzahl von Sensoren und einer einzigen Antenne die Implementierung der Ansteuerung und des Signallesens des SAW-Temperatursensors relativ lange dauert. Die Anzahl der Antennen begrenzt die Anzahl von SAW-Temperatursensoren in einem System.

### Kurzdarstellung

In Anbetracht dessen stellt die vorliegende Erfindung ein Erfassungssystem und einen windgetriebenen Generator vor, die Installationsraum sparen und Wartungskosten reduzieren können, da es nicht erforderlich ist, eine Batterie regelmäßig auszutauschen, und bei der Durchführung von Mehrpunktmessungen sind die Kosten reduziert und die Anzahl der passiven drahtlosen Sensoren, die das System konfigurieren kann, ist erhöht.

In einem Aspekt der vorliegenden Erfindung wird ein Erfassungssystem bereitgestellt, welches umfasst:
eine Vielzahl von passiven drahtlosen Sensoren, wobei die Vielzahl von passiven drahtlosen Sensoren jeweils an entsprechenden zu erfassenden Positionen bereitgestellt ist und zum Beziehen von Erfassungssignalen der zu erfassenden Positionen verwendet wird;
ein koaxiales Leckkabel, wobei das koaxiale Leckkabel entlang der zu erfassenden Position bereitgestellt ist und das koaxiale Leckkabel elektromagnetische Wellen emittieren kann, um die Vielzahl von passiven drahtlosen Sensoren anzusteuern, und die von den passiven drahtlosen Sensoren gesendeten Erfassungssignale empfangen kann.

In einer möglichen Implementierung ist das koaxiale Leckkabel ein gekoppeltes koaxiales Leckkabel.

In einer möglichen Implementierung sind die passiven drahtlosen Sensoren Akustische-Oberflächenwellen-Sensoren (SAW-Sensoren).

In einer möglichen Implementierung umfasst das Erfassungssignal eine Temperatur und die passiven drahtlosen Sensoren sind SAW-Temperatursensoren.

In einer möglichen Implementierung überträgt die Vielzahl von passiven drahtlosen Sensoren das Erfassungssignal parallel und/oder seriell.

In einer möglichen Implementierung umfasst das System eine Vielzahl von Kanälen, die einer Vielzahl von passiven drahtlosen Sensoren entsprechen, wobei die Vielzahl von passiven drahtlosen Sensoren Erfassungssignale über die Vielzahl von Kanäle übertragen.

In einer möglichen Implementierung teilen sich einige passive drahtlose Sensoren der Vielzahl von passiven drahtlosen Sensoren einen gemeinsamen Kanal zum Übertragen von Erfassungssignalen, und die passiven drahtlosen Sensoren, die sich einen gemeinsamen Kanal teilen, übertragen Erfassungssignale in einer Zeitmultiplex-Weise.

In einer möglichen Implementierung sind die Abstände zwischen der Vielzahl von passiven drahtlosen Sensoren und dem koaxialen Leckkabel gleich.

In einer möglichen Implementierung umfasst das System ferner:
eine Basisstation, die mit einem ersten Ende des koaxialen Leckkabels verbunden ist, wobei das koaxiale Leckkabel das empfangene Erfassungssignal an die Basisstation überträgt;
wobei die Basisstation das Erfassungssignal demoduliert und das demodulierte Erfassungssignal an eine Überwachungszentrale überträgt.

In einer möglichen Implementierung umfasst das System ferner:
eine Last, die mit einem zweiten Ende des koaxialen Leckkabels verbunden ist.

In einer möglichen Implementierung umfasst das System ferner: einen Repeater, wobei der Repeater an dem koaxialen Leckkabel bereitgestellt ist und sich zwischen der Basisstation und der Last befindet.

In einer möglichen Implementierung umfasst das System ferner: einen Leistungsteiler, wobei die Basisstation über den Leistungsteiler mit einer Vielzahl von koaxialen Leckkabeln verbunden ist.

In einer möglichen Implementierung umfasst das System ferner: eine Gleichstrom-Isolationsvorrichtung,
wobei die Gleichstrom-Isolationsvorrichtung zwischen der Basisstation und dem Leistungsteiler bereitgestellt ist,
wobei das Ende der Gleichstrom-Isolationsvorrichtung, das mit dem Leistungsteiler verbunden ist, mit Masse verbunden ist.

In einer möglichen Implementierung ist die Überwachungszentrale ein Remotecomputer und das Erfassungssignal ist über den Remotecomputer anzeigbar. In einem anderen Aspekt der vorliegenden Offenbarung ist ein windgetriebener Generator bereitgestellt, der das oben erwähnte Erfassungssystem umfasst.

Durch die Bereitstellung des passiven drahtlosen Sensors an einer zu erfassenden Position, um das Erfassungssignal der zu erfassenden Position zu beziehen, werden die folgenden Vorteile erzielt: Es ist kein großer Installationsraum erforderlich; es ist nicht erforderlich, eine Batterie regelmäßig auszutauschen; es ist nicht erforderlich, eine Vielzahl von Einheiten zum drahtlosen Laden und Signalverarbeitungseinheiten usw. zu konfigurieren; und bei Durchführung von Mehrpunktmessungen sind die Kosten reduziert. Außerdem wird ein koaxiales Leckkabel verwendet, um eine herkömmliche Antenne zu ersetzen, was der Bereitstellung von einer Vielzahl von Antennen ohne die Notwendigkeit eines großen Installationsraums äquivalent ist und den effektiven Abstand der Antennen erhöht, wodurch die Anzahl von passiven drahtlosen Sensoren im System erhöht wird.

Daher kann das Erfassungssystem gemäß den oben erwähnten Ausführungsformen der vorliegenden Offenbarung Installationsraum sparen und Wartungskosten reduzieren, da es nicht erforderlich ist, eine Batterie regelmäßig auszutauschen, und bei der Durchführung von Mehrpunktmessungen sind die Kosten reduziert und die Anzahl der passiven drahtlosen Sensoren, die das System konfigurieren kann, ist erhöht.

Andere Merkmale und Aspekte der vorliegenden Offenbarung werden anhand der folgenden ausführlichen Beschreibungen beispielhafter Ausführungsformen unter Bezugnahme auf Zeichnungen klar.

### Kurzbeschreibung der Zeichnungen

Die Zeichnungen, die in der Beschreibung enthaltenen sind und einen Teil davon bilden, veranschaulichen zusammen mit der Beschreibung beispielhafte Ausführungsformen, Merkmale und Aspekte der vorliegenden Offenbarung und werden dazu verwendet, das Prinzip der vorliegenden Offenbarung zu erläutern.
Fig. 1 ist ein schematisches Diagramm eines Erfassungssystems gemäß einer Ausführungsform der vorliegenden Offenbarung.
Fig. 2 ist ein schematisches Diagramm eines Erfassungssystems gemäß einer Ausführungsform der vorliegenden Offenbarung.
Fig. 3 ist ein schematisches Diagramm eines Erfassungssystems gemäß einer Ausführungsform der vorliegenden Offenbarung.

### Ausführliche Beschreibung

Verschiedene beispielhafte Ausführungsformen, Merkmale und Aspekte der vorliegenden Offenbarung werden nachstehend unter Bezugnahme auf die Zeichnungen ausführlich beschrieben. Gleiche Bezugszeichen in den Zeichnungen kennzeichnen Elemente mit gleichen oder ähnlichen Funktionen. Obwohl verschiedene Aspekte der Ausführungsformen in den Zeichnungen gezeigt sind, sind die Zeichnungen, sofern nicht anders angegeben, nicht notwendigerweise maßstabsgetreu gezeichnet.

Das hier verwendete Wort "beispielhaft" bedeutet "als Beispiel, Ausführungsform oder Veranschaulichung dienend". Vorliegend als "beispielhaft" beschriebene Ausführungsformen sind nicht notwendigerweise als besser als andere Ausführungsformen oder diesen überlegen aufzufassen.

Um die vorliegende Offenbarung besser zu veranschaulichen, werden in den folgenden konkreten Ausführungsformen außerdem zahlreiche konkrete Details angegeben. Der Fachmann versteht, dass die vorliegende Offenbarung auch ohne bestimmte konkrete Details implementiert werden kann. In einigen Beispielen wurden die dem Fachmann bekannten Verfahren, Mittel, Elemente und Schaltungen nicht ausführlich beschrieben, um den Kern der vorliegenden Offenbarung hervorzuheben.

Um die oben erwähnten technischen Probleme zu lösen, die durch die vorliegende Offenbarung aufgezeigt werden, stellt die vorliegende Offenbarung ein Erfassungssystem bereit, das die Erfassung von Temperaturinformationen dynamischer Komponenten in einem windgetriebenen Generator realisieren kann, ohne dass ein großer Installationsraum erforderlich ist. Was Mehrpunktmessungen betrifft, so kann das Erfassungssystem die Kosten senken und die Induktionszeit weiter verkürzen, um die Erfassungsgenauigkeit zu verbessern.

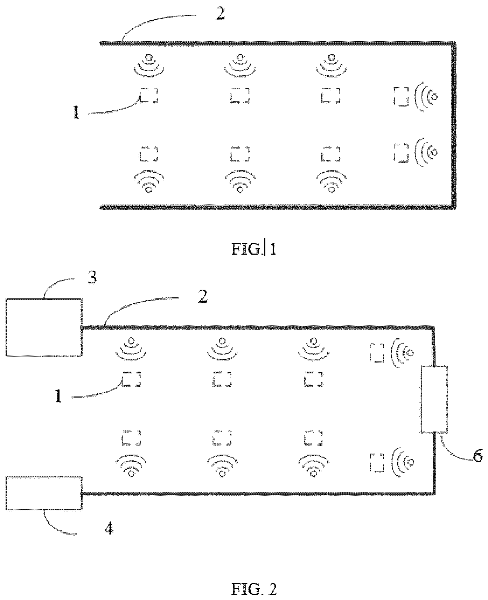

Fig. 1 ist ein schematisches Diagramm eines Erfassungssystems gemäß einer Ausführungsform der vorliegenden Offenbarung. Wie in Fig. 1 gezeigt ist, kann das System umfassen:
eine Vielzahl von passiven drahtlosen Sensoren 1, wobei die Vielzahl von passiven drahtlosen Sensoren 1 jeweils an den entsprechenden zu erfassenden Positionen bereitgestellt ist und zum Beziehen von Erfassungssignalen für die zu erfassenden Positionen verwendet wird;
ein koaxiales Leckkabel 2, wobei das koaxiale Leckkabel 2 entlang der zu erfassenden Position bereitgestellt ist und das koaxiale Leckkabel 2 elektromagnetische Wellen emittieren kann, um die Vielzahl von passiven drahtlosen Sensoren 1 anzusteuern, und das von den passiven drahtlosen Sensoren 1 gesendete Erfassungssignal empfangen kann.

Die passiven drahtlosen Sensoren 1 müssen nicht mit einer Stromversorgung verbunden sein und können durch externe Faktoren angesteuert werden. In einem Beispiel können die passiven drahtlosen Sensoren 1 der vorliegenden Offenbarung Akustische-Oberflächenwellen-Sensoren (SAW-Sensoren) sein. Es wird angemerkt, dass entsprechend den tatsächlichen Messanforderungen auch andere passive drahtlose Sensoren 1, wie etwa passive Tags, verwendet werden können, dies ist in der vorliegenden Offenbarung nicht beschränkt.

Das Erfassungssignal kann eine Temperatur umfassen und kann auch andere Signale umfassen, die erfasst werden müssen, wie beispielsweise Luftfeuchte und Druck. Wenn das Erfassungssignal eine Temperatur umfasst, können die passiven drahtlosen Sensoren 1 dementsprechend SAW-Temperatursensoren umfassen, dies ist in der vorliegenden Offenbarung nicht beschränkt.

In einem Beispiel können sich die zu erfassenden Positionen auf einem windgetriebenen Generator befinden. Der windgetriebene Generator kann eine Vielzahl von zu erfassenden Positionen umfassen, zum Beispiel Positionen an statischen Komponenten wie einer Steuerung und einem Maschinenraum oder Positionen an dynamischen Komponenten wie einem Lager und einem Getriebe, dies ist in der vorliegenden Offenbarung nicht beschränkt. Es wird angemerkt, dass die oben beschriebenen Positionen nur einige Beispiele für die zu erfassenden Positionen sind und dass die zu erfassenden Positionen entsprechend verschiedenen Anwendungsszenarien oder Erfassungsanforderungssätzen ausgewählt werden können.

Das koaxiale Leckkabel 2 kann mit einer Vielzahl von Schlitzen versehen sein. Elektromagnetische Wellen werden in dem koaxialen Leckkabel 2 in Längsrichtung übertragen und über die Schlitze nach außen abgestrahlt. Elektromagnetische Wellen von außen können auch über die Schlitze in das Innere des koaxialen Leckkabels induziert und in Längsrichtung übertragen werden. Eine Vielzahl von Schlitzen ist einer Vielzahl von Antennen äquivalent.

Das Bereitstellen des koaxialen Leckkabels 2 entlang der zu erfassenden Positionen kann bedeuten, dass sich das koaxiale Leckkabel 2 durch jede der zu erfassenden Positionen erstreckt, oder, anders ausgedrückt, das koaxiale Leckkabel 2 ist in einem vorbestimmten Abstand von den zu erfassenden Positionen entlang der Verteilung der zu erfassenden Positionen verlegt. Der vorbestimmte Abstand kann ein Abstand sein, bei dem eine gute Kommunikationswirkung zwischen den passiven drahtlosen Sensoren 1 und dem koaxialen Leckkabel 2 aufrechterhalten werden kann, und der vorbestimmte Abstand kann ein Wertebereich sein, der in der vorliegenden Offenbarung nicht beschränkt ist.

In einer möglichen Implementierung kann der Abstand zwischen dem koaxialen Leckkabel 2 und der Vielzahl von passiven drahtlosen Sensoren 1 gleich sein, das heißt, der Abstand zwischen dem koaxialen Leckkabel 2 und einem jeweiligen passiven drahtlosen Sensor 1 kann ein fester Wert sein. Der Abstand zwischen dem passiven drahtlosen Sensor 1 und dem koaxialen Leckkabel 2 kann sich auf die kürzeste Entfernung zwischen dem passiven drahtlosen Sensor 1 und dem koaxialen Leckkabel 2 beziehen. Auf diese Weise kann der Kommunikationsprozess stabiler sein.

Wie oben erwähnt, können die passiven drahtlosen Sensoren 1 durch die externen Faktoren angesteuert werden. In der vorliegenden Offenbarung kann das koaxiale Leckkabel 2 elektromagnetische Wellen emittieren, um die passiven drahtlosen Sensoren 1 anzusteuern. Es dient nun ein SAW-Temperatursensor als Beispiel. Der SAW-Temperatursensor kann ein piezoelektrisches Substrat, einen Interdigitalwandler, ein reflektierendes Gitter und eine Antenne umfassen. Von dem koaxialen Leckkabel 2 emittierte elektromagnetische Wellen können über die Antenne empfangen und an den Interdigitalwandler übertragen werden, und der Interdigitalwandler regt durch den inversen piezoelektrischen Effekt akustische Oberflächenwellen an, um die elektrisch-akustische Umwandlung zu implementieren. Die akustischen Oberflächenwellen breiten sich auf der Oberfläche des piezoelektrischen Substrats aus und werden von dem reflektierenden Gitter zurück zum Interdigitalwandler reflektiert. Der Interdigitalwandler wandelt die reflektierten akustischen Oberflächenwellen durch den piezoelektrischen Effekt in Anregungssignale um, und die Anregungssignale werden über die Antenne in Form elektromagnetischer Wellen an das koaxiale Leckkabel übertragen.

Wenn sich die Temperatur ändert, ändern sich die Wellenlänge und Geschwindigkeit der akustischen Oberflächenwellen, die sich entlang der Oberfläche des piezoelektrischen Substrats ausbreiten, entsprechend. In diesem Fall ändern sich die Phase und Frequenz der über die Antenne übertragenen Anregungssignale entsprechend, und die Temperatur kann durch Erfassen der Phase und Frequenz der Anregungssignale erfasst werden.

Durch die Bereitstellung des passiven drahtlosen Sensors an einer zu erfassenden Position, um das Erfassungssignal der zu erfassenden Position zu beziehen, werden die folgenden Vorteile erzielt: Es ist kein großer Installationsraum erforderlich; es ist nicht erforderlich, eine Batterie regelmäßig auszutauschen; es ist nicht erforderlich, eine Vielzahl von Einheiten zum drahtlosen Laden und Signalverarbeitungseinheiten usw. zu konfigurieren; und bei Durchführung von Mehrpunktmessungen sind die Kosten reduziert. Außerdem wird ein koaxiales Leckkabel verwendet, um eine herkömmliche Antenne zu ersetzen, was der Bereitstellung von einer Vielzahl von Antennen ohne die Notwendigkeit eines großen Installationsraums äquivalent ist und den effektiven Abstand der Antennen erhöht, wodurch die Anzahl von passiven drahtlosen Sensoren im System erhöht wird.

Daher kann das Erfassungssystem gemäß den oben erwähnten Ausführungsformen der vorliegenden Offenbarung Installationsraum sparen und Wartungskosten reduzieren, da es nicht erforderlich ist, eine Batterie regelmäßig auszutauschen, und bei der Durchführung von Mehrpunktmessungen sind die Kosten reduziert und die Anzahl der passiven drahtlosen Sensoren, die das System konfigurieren kann, ist erhöht.

Fig. 2 ist ein schematisches Diagramm eines Erfassungssystems gemäß einer Ausführungsform der vorliegenden Offenbarung. Wie in Fig. 2 gezeigt ist, kann das System in einer möglichen Implementierung ferner umfassen:
eine Basisstation 3, die mit einem ersten Ende des koaxialen Leckkabels 2 verbunden ist, wobei das koaxiale Leckkabel 2 das empfangene Erfassungssignal an die Basisstation 3 überträgt;
wobei die Basisstation 3 das Erfassungssignal demoduliert und das demodulierte Erfassungssignal an eine Überwachungszentrale überträgt.

Das Erfassungssystem kann ferner eine Last 4 umfassen, wobei die Last 4 mit einem zweiten Ende des koaxialen Leckkabels 2 verbunden sein kann. Die Last 4 kann verhindern, dass von der Basisstation 3 gesendete elektromagnetische Wellensignale zur Basisstation 3 reflektiert werden und Interferenzen verursachen.

Wie oben beschrieben ist, kann die Basisstation 3 Kommunikations- und Datenverarbeitungsfunktionen aufweisen, welche die folgenden Vorgänge ausführen: Übertragen elektromagnetischer Wellen, Empfangen des von dem koaxialen Leckkabel 2 übertragenen Erfassungssignals, Demodulieren des Erfassungssignals und Übertragen des demodulierten Erfassungssignals an die Überwachungszentrale usw. Die Kommunikation zwischen der Basisstation 3 und der Überwachungszentrale kann über eine Datenschnittstelle implementiert sein, und die Datenschnittstelle kann RS485 oder RJ45 entsprechen. Die Überwachungszentrale kann ein Remotecomputer sein, und das Erfassungssignal kann über den Remotecomputer angezeigt werden. Beispielsweise kann der Remotecomputer eine Anzeigevorrichtung umfassen. Ein Administrator kann ferner über die Anzeigevorrichtung des Remotecomputers die Basisstation 3 steuern und das Erfassungssignal einer zu erfassenden Position, die er betrachten möchte, durch die Basisstation 3 beziehen, wodurch die Reaktionszeit verringert wird.

In einer möglichen Implementierung kann jeder passive drahtlose Sensor (SAW-Temperatursensor) eine eindeutige Hochfrequenzkennung (RFID - Radio Frequency Identification) aufweisen, und sowohl ein Erfassungssignal als auch ein demoduliertes Erfassungssignal kann die RFID des passiven drahtlosen Sensors enthalten.

In dieser Implementierung kann eine Vielzahl von passiven drahtlosen Sensoren Erfassungssignale seriell kommunizierend übertragen. Zum Beispiel kann die Vielzahl von passiven drahtlosen Sensoren Erfassungssignale in einer Zeitmultiplex-Weise übertragen, beispielsweise indem Erfassungssignale nacheinander sequenziell übertragen werden.

Die Basisstation 3 kann über die RFID Erfassungssignale identifizieren, die von einer Vielzahl von verschiedenen passiven drahtlosen Sensoren übertragen werden. Die Beziehung zwischen der RFID des passiven drahtlosen Sensors und der zu erfassenden Position kann im Voraus in der Überwachungszentrale gespeichert worden sein. Die Überwachungszentrale kann die Temperatur und andere Informationen über die zu erfassende Position durch die RFID des passiven drahtlosen Sensors, die im demodulierten Erfassungssignal enthalten ist, und die im Voraus gespeicherte Beziehung zwischen der RFID des passiven drahtlosen Sensors und der zu erfassenden Position bestimmen. Nach dem Bestimmen der Temperatur und der anderen Informationen über die zu erfassende Position kann der Remotecomputer die entsprechende Beziehung zwischen der zu erfassenden Position und ihrer Temperatur durch die Anzeigevorrichtung anzeigen.

In einer anderen möglichen Implementierung entspricht die Vielzahl von passiven drahtlosen Sensoren 1 einer Vielzahl von Kanälen, wobei die Vielzahl von passiven drahtlosen Sensoren 1 Erfassungssignale über die Vielzahl von Kanäle überträgt.

In einem Beispiel können für eine Vielzahl von passiven drahtlosen Sensoren 1 im System unterschiedliche Arbeitsfrequenzen eingerichtet sein. Eine Vielzahl von passiven drahtlosen Sensoren kann Erfassungssignale parallel kommunizierend übertragen, das heißt, jeder der passiven drahtlosen Sensoren 1 weist seine eigene eindeutige Arbeitsfrequenz auf, das heißt, jeder der passiven drahtlosen Sensoren 1 entspricht einem Kanal und überträgt das Erfassungssignal über den Kanal an die Basisstation 3. Auf diese Weise kann die Vielzahl von passiven drahtlosen Sensoren die Erfassungssignale gleichzeitig übertragen, so dass eine Vielzahl von Signalen in kürzerer Zeit erfasst wird und die Erfassungseffizienz verbessert ist.

In einer möglichen Implementierung kann das koaxiale Leckkabel 2 ein gekoppeltes koaxiales Leckkabel sein. Die Verwendung von gekoppelten koaxialen Leckkabeln kann eine Breitbandfähigkeit voll ausnutzen, um Kommunikation mit mehr passiven drahtlosen Sensoren zu realisieren.

In einem anderen Beispiel kann die Vielzahl von passiven drahtlosen Sensoren Erfassungssignale parallel und seriell übertragen.

Zum Beispiel teilen sich einige passive drahtlose Sensoren der Vielzahl von passiven drahtlosen Sensoren einen gemeinsamen Kanal zum Übertragen von Erfassungssignalen, und die passiven drahtlosen Sensoren, die sich einen gemeinsamen Kanal teilen, können Erfassungssignale in einer Zeitmultiplex-Weise übertragen. Beispielsweise umfasst das System insgesamt zehn passive drahtlose Sensoren, wobei die Arbeitsfrequenz von drei passiven drahtlosen Sensoren 11 eine Frequenz 1 (entsprechend Kanal 1) ist, die Arbeitsfrequenz von vier passiven drahtlosen Sensoren 12 eine Frequenz 2 (entsprechend Kanal 2) ist und die Arbeitsfrequenz von drei passiven drahtlosen Sensoren 13, 14 und 15 eine Frequenz 3 (entsprechend Kanal 3), eine Frequenz 4 (entsprechend Kanal 4) bzw. eine Frequenz 5 (entsprechend Kanal 5) ist. Dann übertragen die drei passiven drahtlosen Sensoren 11 Erfassungssignale über Kanal 1 in einer Zeitmultiplex-Weise, die vier passiven drahtlosen Sensoren 12 übertragen Erfassungssignale über Kanal 2 in einer Zeitmultiplex-Weise und die passiven drahtlosen Sensoren 13, 14 und 15 können Erfassungssignale gleichzeitig über Kanal 3, Kanal 4 und Kanal 5 übertragen.

In einer möglichen Implementierung, wie in Fig. 2 gezeigt, kann das System ferner umfassen: einen Repeater 6, wobei der Repeater 6 an dem koaxialen Leckkabel 2 bereitgestellt ist und sich zwischen der Basisstation 3 und der Last 4 befindet. Der Repeater 6 wird verwendet, um die Leistung von elektromagnetischen Wellen zu erhöhen, die in dem koaxialen Leckkabel 2 übertragen werden.

Elektromagnetische Wellen weisen, während sie in dem koaxialen Leckkabel 2 übertragen werden, eine Längsdämpfung auf, und das koaxiale Leckkabel weist ferner Kopplungsverluste auf. Mit zunehmender Übertragungsentfernung tritt daher eine Leistungsdämpfung auf, und die Übertragungsentfernung eines einzelnen koaxialen Leckkabels beträgt normalerweise weniger als 400 Meter. Das Bereitstellen eines Repeaters an dem koaxialen Leckkabel kann die Übertragungsentfernung derart verlängern, dass im Fall einer langen Übertragungsentfernung immer noch Kommunikation mit einer Vielzahl von passiven drahtlosen Sensoren 1 implementiert werden kann.

In einer möglichen Implementierung kann das System ferner umfassen: einen Leistungsteiler 5, wobei die Basisstation 3 über den Leistungsteiler 5 mit einer Vielzahl von koaxialen Leckkabeln verbunden ist.

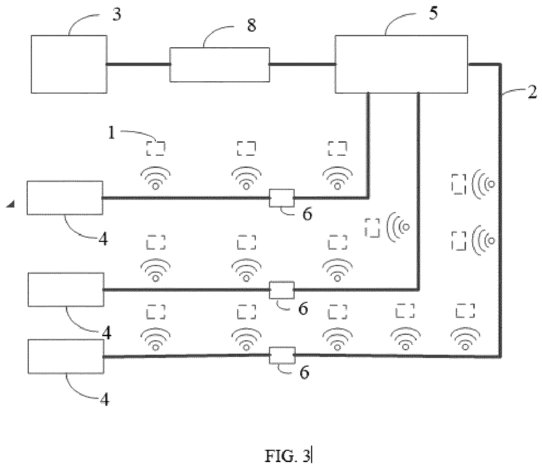

Fig. 3 ist ein schematisches Diagramm eines Erfassungssystems gemäß einer Ausführungsform der vorliegenden Offenbarung. Wie in Fig. 3 gezeigt ist, kann das Erfassungssystem eine Vielzahl von koaxialen Leckkabeln 2 umfassen, wobei jedes der koaxialen Leckkabel 2 ein erstes Ende, das mit einem Leistungsteiler 5 verbunden ist, und ein zweites Ende aufweist, das mit einer Last 4 verbunden ist. Der Leistungsteiler 5 kann die Energie einer von einer Basisstation 3 emittierten elektromagnetischen Welle in einer Vielzahl von elektromagnetische Wellen mit gleicher oder ungleicher Energie aufteilen, die an die Vielzahl von koaxialen Leckkabel 2 ausgegeben werden. In einer möglichen Implementierung kann ferner jedes koaxiale Leckkabel 2 mit einem Repeater 6 versehen sein.

In einer möglichen Implementierung kann das System ferner umfassen: eine Gleichstrom-Isolationsvorrichtung 8,
wobei die Gleichstrom-Isolationsvorrichtung 8 zwischen der Basisstation 3 und dem Leistungsteiler 5 bereitgestellt ist und das mit dem Leistungsteiler 5 verbundene Ende der Gleichstrom-Isolationsvorrichtung 8 mit Masse 7 verbunden ist. Die Gleichstrom-Isolationsvorrichtung kann das Potenzial zwischen Eingang, Ausgang, Stromversorgung und Masse effektiv isolieren, um die Sicherheit des gesamten Systems zu gewährleisten.

Die vorliegende Offenbarung stellt ferner einen windgetriebenen Generator bereit, der das oben erwähnte Erfassungssystem umfasst. Durch das oben erwähnte Erfassungssystem können Temperatur und andere Informationen über alle Vorrichtungen in dem windgetriebenen Generator überwacht werden.

Die Ausführungsformen der vorliegenden Offenbarung wurden oben beschrieben, und diese Beschreibungen sind beispielhaft und nicht erschöpfend, und sie sind nicht auf die offenbarten Ausführungsformen beschränkt. Viele Abwandlungen und Variationen sind für den Fachmann offensichtlich, ohne vom Umfang und Geist der beschriebenen Ausführungsformen abzuweichen. Die vorliegend verwendete Terminologie wurde gewählt, um das Prinzip der Ausführungsformen, die praktische Anwendung oder technische Verbesserung gegenüber auf dem Markt erhältlichen Technologien am besten zu erläutern oder um es dem Fachmann zu ermöglichen, die vorliegend offenbarten Ausführungsformen zu verstehen.

### Bezugszeichenliste

- 1: passiver drahtloser Sensor
- 2: koaxiales Leckkabel
- 3: Basisstation
- 4: Last
- 5: Leistungsteiler
- 6: Repeater
- 7: Masse
- 8: Gleichstrom-Isolationsvorrichtung.

## Claims

1. Erfassungssystem, wobei das System umfasst:
eine Vielzahl von passiven drahtlosen Sensoren (1), wobei die Vielzahl von passiven drahtlosen Sensoren (1) jeweils an entsprechenden zu erfassenden Positionen bereitgestellt ist und zum Beziehen von Erfassungssignalen der zu erfassenden Positionen verwendet wird;
ein koaxiales Leckkabel (2), wobei das koaxiale Leckkabel (2) entlang der zu erfassenden Position bereitgestellt ist und das koaxiale Leckkabel (2) elektromagnetische Wellen emittieren kann, um die Vielzahl von passiven drahtlosen Sensoren (1) anzusteuern, und das von den passiven drahtlosen Sensoren (1) gesendete Erfassungssignal empfangen kann.

2. Erfassungssystem nach Anspruch 1, wobei
das koaxiale Leckkabel (2) ein gekoppeltes koaxiales Leckkabel ist.

3. Erfassungssystem nach Anspruch 1, wobei
die passiven drahtlosen Sensoren (1) Akustische-Oberflächenwellen-Sensoren (SAW-Sensoren) sind.

4. Erfassungssystem nach Anspruch 1, wobei
das Erfassungssignal eine Temperatur umfasst und die passiven drahtlosen Sensoren (1) SAW-Temperatursensoren sind.

5. Erfassungssystem nach Anspruch 1, wobei
die Vielzahl von passiven drahtlosen Sensoren (1) das Erfassungssignal parallel und/oder seriell überträgt.

6. Erfassungssystem nach Anspruch 5, wobei die Vielzahl von passiven drahtlosen Sensoren (1) einer Vielzahl von Kanälen entspricht und die Vielzahl von passiven drahtlosen Sensoren (1) das Erfassungssignal über die Vielzahl von Kanälen überträgt.

7. Erfassungssystem nach Anspruch 6, wobei
sich einige passive drahtlose Sensoren (1) der Vielzahl von passiven drahtlosen Sensoren (1) einen gemeinsamen Kanal zum Übertragen von Erfassungssignalen teilen und die passiven drahtlosen Sensoren, die sich einen gemeinsamen Kanal teilen, Erfassungssignale in einer Zeitmultiplex-Weise übertragen.

8. Erfassungssystem nach einem der Ansprüche 1 bis 7, wobei die Abstände zwischen der Vielzahl von passiven drahtlosen Sensoren (1) und dem koaxialen Leckkabel (2) gleich sind.

9. Erfassungssystem nach einem der Ansprüche 1 bis 7, wobei das System ferner umfasst:
eine Basisstation (3), die mit einem ersten Ende des koaxialen Leckkabels (2) verbunden ist, wobei das koaxiale Leckkabel (2) das empfangene Erfassungssignal an die Basisstation (3) überträgt;
wobei die Basisstation (3) das Erfassungssignal demoduliert und das demodulierte Erfassungssignal an eine Überwachungszentrale überträgt.

10. Erfassungssystem nach Anspruch 9, wobei das System ferner umfasst:
eine Last (4), die mit einem zweiten Ende des koaxialen Leckkabels (2) verbunden ist.

11. Erfassungssystem nach Anspruch 9 oder 10, wobei das System ferner umfasst:
einen Repeater (6), wobei der Repeater (6) an dem koaxialen Leckkabel (2) bereitgestellt ist und sich zwischen der Basisstation (3) und der Last befindet (4).

12. Erfassungssystem nach Anspruch 11, wobei das System ferner umfasst: einen Leistungsteiler (5), wobei die Basisstation (3) über den Leistungsteiler (5) mit einer Vielzahl von koaxialen Leckkabeln (2) verbunden ist.

13. Erfassungssystem nach Anspruch 12, wobei das System ferner umfasst: eine Gleichstrom-Isolationsvorrichtung (8),
wobei die Gleichstrom-Isolationsvorrichtung (8) zwischen der Basisstation (3) und dem Leistungsteiler (5) bereitgestellt ist,
wobei das Ende der Gleichstrom-Isolationsvorrichtung (8), das mit dem Leistungsteiler (5) verbunden ist, mit Masse (7) verbunden ist.

14. Erfassungssystem nach Anspruch 9, wobei
die Überwachungszentrale ein Remotecomputer ist und das Erfassungssignal über den Remotecomputer anzeigbar ist.

15. Windgetriebener Generator, wobei der windgetriebene Generator ein Erfassungssystem nach einem der Ansprüche 1 bis 14 umfasst.
